# EUROPÄISCHE PATENTANMELDUNG

(11) **EP 0 569 766 A2**
(43) Veröffentlichungstag der Anmeldung: **18.11.1993**
(21) Anmeldenummer: 93106756.5
(22) Anmeldetag: 27.04.1993
(51) Int. Cl.: H05K 5/00, H05K 5/02

(54) **Gehäuse für ein Elektronikmodul**

(30) Priorität: 30.04.1992 DE 9205812 U
(71) Anmelder: KLASCHKA GMBH & CO., D-75233 Tiefenbronn-Lehningen (DE)
(72) Erfinder: Klaschka, Walter, D-72250 Freudenstadt-Kniebis (DE); Pflüger, Harald, D-71134 Aidlingen (DE)
(74) Vertreter: Ostertag, Ulrich

(57) **Zusammenfassung**

Ein Gehäuse für einen Elektronikmodul hat einen aus stranggepreßtem Material hergestellten Gehäusegrundkörper (10), zwei dessen Ende verschließende Endplatten (12) sowie zwei endständige Montageköpfe (28) mit einer mittigen Aufnahmebohrung (30) für eine Gewinde-Montageschraube (32) sowie einer außermittige Aufnahme (54) für eine selbstschneidende Montageschraube (56). Von der Unterkante der Montageköpfe (28) springen Rastausnehmungen (50) für eine Hutschiene (52) zurück. Die Montageköpfe (28) sind in unterschiedlicher Stellung am Gehäusegrundkörper befestigbar, und die Achse der außermittigen Aufnahme (54) ist so gewählt, daß sich die zugeordneten Montageschraube (56) in einer Stellung der Montageköpfe (28) in den freien Längsrand der Hutschiene (52) hineinschneiden kann.

## Beschreibung

Die Erfindung betrifft ein Gehäuse für einen Elektronikmodul gemäß dem Oberbegriff des Anspruches 1.

Derartige Gehäuse werden z.B. für die Einheiten speicherprogrammierbarer Steuerungen (SPS) verwendet. Diese Einheiten werden auf einer Montagefläche, typischerweise der Rückwand eines Montageschrankes montiert.

Durch die vorliegende Erfindung soll ein Gehäuse gemäß dem Oberbegriff des Anspruches 1 geschaffen werden, welches ohne mechanische Bearbeitung des Gehäusegrundkörpers auf einer Montagefläche angebracht werden kann.

Diese Aufgabe ist erfindungsgemäß gelöst durch ein Gehäuse gemäß Anspruch 1.

Vorteilhafte Weiterbildungen der Erfindung sind in Unteransprüchen angegeben.

Mit der Weiterbildung der Erfindung gemäß Anspruch 2 wird erreicht, daß die Montageköpfe preiswert hergestellt werden können und zugleich das Gehäuse nach Anbringung auf der Montagefläche elektrisch von letzterer isoliert ist. Über die Wahl des verwendeten Kunststoffes kann man zugleich auch dem Montagekopf eine gewünschte Elastizität geben.

Die Weiterbildung der Erfindung gemäß Anspruch 3 ist im Hinblick auf einfache Montage der verschiedenen Teile des Gehäuses unter Verwendung nur weniger Schrauben von Vorteil.

Bei einem Gehäuse gemäß Anspruch 4 läßt sich der Abstand des Gehäusegrundkörpers von der Montagefläche auf einfache Weise abändern.

Ein Gehäuse, wie es im Anspruch 5 angegeben ist, bietet die Möglichkeit der direkten Montage auf einer Montagefläche, die mit Gewindebohrungen versehen ist.

Dabei ist bei der Weiterbildung gemäß Anspruch 6 gewährleistet, daß die mittige Montageschraube jeweils unverlierbar am Montagekopf gehalten ist.

Ein Gehäuse, welches gemäß Anspruch 7 ausgebildet ist, bietet die Möglichkeit der Befestigung an einer Hutschiene. Diese Befestigungsmöglichkeit kann bei der Erfindung einfach mit der Befestigungsmöglichkeit an der Montagefläche selbst (vergl. Anspruch 6) kombiniert werden.

Mit der Weiterbildung der Erfindung gemäß Anspruch 8 wird erreicht, daß eine sichere, mechanisch belastbare Verbindung zwischen dem Gehäuse und der Hutschiene durch Formschluß zwischen den Gewindegängen der außermittigen Montageschraube und dem benachbarten Längsrand der Hutschiene zustandekommt. Man braucht also keine stramme Federklemmung zwischen den Montageköpfen und der Hutschiene vorzusehen, was im Hinblick auf ein Verschieben des Gehäuses auf der Hutschiene zu Justierzwecken von Vorteil ist. Nach Abschluß der Justierarbeiten erfolgt dann die sichere Verblockung der Montageköpfe mit der Hutschiene durch Einschneiden der Gewindegänge der außermittigen Montageschrauben in den Rand der Hutschiene.

Ist ein Gehäuse gemäß Anspruch 8 zugleich mit einstellbaren Montageköpfen gemäß Anspruch 4 versehen, so kann eine Umstellung von direkter Befestigung auf einer Montagefläche zur Anbringung an einer Hutschiene und umgekehrt einfach erfolgen.

Die Weiterbildung der Erfindung gemäß Anspruch 9 ist im Hinblick auf ein Abkippen des Gehäuses von der Montagefläche, insbesondere im Hinblick auf ein leichtes Abhebeln von einer Hutschiene von Vorteil.

Nachstehend wird die Erfingung anhand eines Ausführungsbeispieles unter Bezugnahme auf die Zeichnung näher erläutert.

In dieser zeigen:
- Figur 1:: eine Aufsicht auf das Ende eines Gehäuses für eine Einheit einer SPS, gesehen in Längsrichtung des Gehäusegrundkörpers; und
- Figur 2:: eine Aufsicht auf den Endbereich des in Figur 1 gezeigten Gehäuses, gesehen senkrecht zur Ebene des Bodens des Gehäusegrundkörpers.

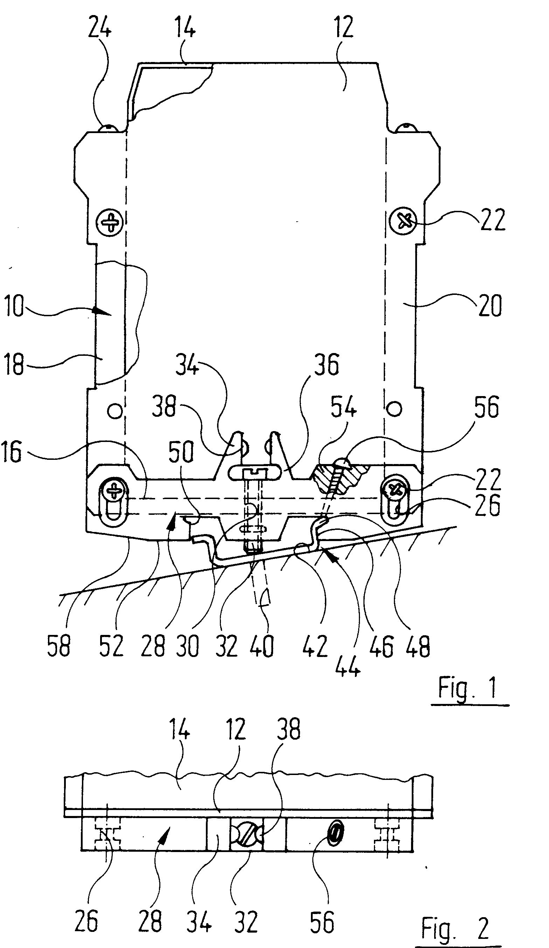

In der Zeichnung ist das Gehäuse für eine Einheit einer SPS wiedergegeben, welches aus einem Gehäusegrundkörper 10 mit senkrecht auf der Zeichenebene von Figur 1 stehender Erstreckungsrichtung, zwei auf dessen Enden aufgesetzten Endplatten 12 sowie einem Deckel 14 besteht.

Der Gehäusegrundkörper 10 ist ein Aluminium-Strangpreßteil mit im wesentlichen U-förmigem Querschnitt und hat einen Boden 16 sowie Seitenwände 18, 20.

Die Endplatten 12 sind über Schrauben 22 auf die Stirnflächen des Gehäusegrundkörpers 10 aufgeschraubte Stanzteile.

Der Deckel 14 ist ein gebogenes Blechteil und an den obenliegenden Endflächen der Seitenwände 18, 20 z.B. durch Schrauben 24 befestigt.

Die in Figur 1 untenliegenden Schrauben 22 erstrecken sich durch Langlöcher 26 von insgesamt mit 28 bezeichneten Montageköpfen. Durch Anziehen dieser Schrauben können somit die Montageköpfe 28 gleichzeitig in unterschiedlicher Relativstellung zum Gehäusegrundkörper 10 mit diesem verbunden werden.

Im mittleren Bereich sind die Montageköpfe 28 mit einer Aufnahmebohrung 30 für eine mittlere Montageschraube 32 versehen. Über dem oberen Ende der Aufnahmebohrung 30 sind zwei Haltearme 34 vorgesehen, deren untere Enden über Biegeabschnitte 36 mit dem Montagekopf 28 verbunden sind. Die innenliegenden Kanten der Haltearme 34 tragen Rastnoppen 38, so daß der Kopf der Montageschraube 32 unter elastischer Auslenkung der Haltearme 34 zwischen diesen hindurch bewegbar ist. Die Montageschrauben 32 dienen zum direkten Anbringen der Montageköpfe 28 an entsprechenden Gewindebohrungen 40 einer Montagefläche 42.

Alternativ kann die Montagefläche 42 eine Hutschiene 44 tragen, die im wesentlichen U-förmigen Querschnitt hat. Seitliche Halteschenkel 46 haben nach außen umgekantete Halteflansche 48. Letztere sind unter elastischer Verformung der Halteschenkel 46 in Rastausnehmungen 50 verrastbar, die von der mit 52 bezeichneten Unterkante der Montageköpfe 28 in Richtung zum Boden 16 des Gehäusegrundkörpers 10 zurückspringen und symmetrisch zur Längsmittelebene des Gehäuses vorgesehen sind.

In den Montageköpfen 28 sind außermittig weitere Aufnahmebohrungen 54 für weitere Montageschrauben 56 vorgesehen. Bei letzteren handelt es sich um selbstschneidende Schrauben.

Die Lage und Neigung der Achsen der Aufnahmebohrungen 54 ist so gewählt, daß sie bei der in der Zeichnung wiedergegebenen untersten Stellung der Montageköpfe 28 kurz vor dem freien Rand der Halteschenkel 46, also kurz hinter dem äußersten Punkt der Rastausnehmungen 50 liegen, so daß sich die Montageschrauben 56 bei auf die Hutschiene 44 aufgerastetem Montagekopf in den Längsrand des nahe benachbarten Halteflansches 48 hineinschneiden können.

Bei nach oben geschobenen Montageköpfen 28 liegen dagegen die Montageschrauben 56 innerhalb des Querschnittsprofiles des Gehäusegrundkörpers 10. Die Befestigung des Gehäuses erfolgt dann über die mittlere Montageschraube 32.

Außenliegende Abschnitte 58 der Unterkante der Montageköpfe 28 verlaufen schräg nach oben und erleichtern so ein Abkippen des Gehäuses von der Montagefläche 42.

Nachdem der Gehäusegrundkörper 10 ein Aluminiumprofilstück ist, die Endplatten 12 und der Deckel 14 einfache Blechstanzteile sind und die Montageköpfe 28 einfache Kunststoffspritzteile sind, läßt sich das gesamte oben beschriebene Gehäuse sehr preiswert herstellen.

## Patentansprüche

1. Gehäuse für einen Elektronikmodul, z.B. eine Steuereinheit, mit einem Gehäusegrundkörper (10) aus stranggepreßtem Material, mit Endplatten (12), durch welche die Enden des Gehäusegrundkörpers (10) verschlossen sind, und mit Mitteln zum Montieren des Gehäuses auf einer Montagefläche (42), dadurch gekennzeichnet, daß die Montagemittel zwei Montageköpfe (28) aufweisen, die mit dem Gehäusegrundkörper (10) verbunden sind und jeweils mindestens eine Aufnahme (30; 54) für eine Montageschraube (32; 56) aufweisen.

2. Gehäuse nach Anspruch 1, dadurch gekennzeichnet, daß die Montageköpfe (28) aus Kunststoff gespritzt sind.

3. Gehäuse nach Anspruch 1 oder 2, wobei die Montageköpfe (28) von den Endplatten (12) getrennte Teile sind, dadurch gekennzeichnet, daß die Montageköpfe (28) über Schrauben (22) mit dem Gehäusegrundkörper (10) verbunden sind, die zugleich auch zum Befestigen der Endplatten (12) am Gehäusegrundkörper (10) dienen.

4. Gehäuse nach Anspruch 3, dadurch gekennzeichnet, daß die Montageköpfe (28) solche Langlöcher (26) für die Befestigungsschrauben (22) aufweisen, welche senkrecht zur Ebene des Bodens (16) des Gehäusegrundkörpers (10) verlaufen.

5. Gehäuse nach einem der Ansprüche 1 bis 4, dadurch gekennzeichnet, daß eine der Aufnahmen (30) bei der Mitte der Montageköpfe (28) vorgesehen ist und senkrecht zur Ebene des Bodens (16) des Gehäusegrundkörpers (10) verläuft.

6. Gehäuse nach Anspruch 5, gekennzeichnet durch mindestens einen bei der mittigen Aufnahme (30) vorgesehenen Haltearm (34), an welchem der Kopf der zugeordneten Montageschraube (32) unter elastischer Verformung des Haltearmes (34) vorbeibewegbar ist.

7. Gehäuse nach einem der Ansprüche 1 bis 6, dadurch gekennzeichnet, daß von den unteren Kanten der Montageköpfe (28) Rastausnehmungen (50) zurückspringen, in welche elastisch verformbare Halteschenkel (46) einer Hutschiene (44) einrastbar sind.

8. Gehäuse nach Anspruch 7, dadurch gekennzeichnet, daß die Montageköpfe (28) jeweils mindestens eine außermittige Aufnahme (54) und eine hierin angeordnete selbstschneidende Montageschraube (56) aufweisen, wobei die Achse und der Anstellwinkel dieser außermittigen Aufnahmen (54) jeweils so gewählt ist, daß sich das Gewinde der zugeordneten Montageschraube (56) in den freien Längsrand eines Halteschenkels (46) der Hutschiene (44) hineinschneiden kann.

9. Gehäuse nach einem der Ansprüche 1 bis 8, dadurch gekennzeichnet, daß außenliegende Abschnitte (58) der Unterkante (52) der Montageköpfe (28) schräg in Richtung zur Ebene des Bodens (16) des Gehäusegrundkörpers (10) hin verlaufen.
